(19) Europäisches Patentamt
European Patent Office
Office européen des brevets

(11) **EP 4 542 884 A1**

(12) **EUROPEAN PATENT APPLICATION**

(43) Date of publication:
**23.04.2025 Bulletin 2025/17**

(21) Application number: **24202576.5**

(22) Date of filing: **25.09.2024**

(51) International Patent Classification (IPC):
**H04B 17/309** (2015.01)

(52) Cooperative Patent Classification (CPC):
**H04B 17/346; H04B 17/336**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **17.10.2023 KR 20230138924**

(71) Applicant: **Samsung Electronics Co., Ltd.**
**Suwon-si, Gyeonggi-do 16677 (KR)**

(72) Inventors:
• **LEE, Jaehwan**
**16677 Suwon-si (KR)**
• **OH, Jinwoo**
**16677 Suwon-si (KR)**
• **YOON, Hongsik**
**16677 Suwon-si (KR)**

(74) Representative: **Marks & Clerk LLP**
**15 Fetter Lane**
**London EC4A 1BW (GB)**

(54) **WIRELESS COMMUNICATION DEVICE CALCULATING SNR BY USING UNUSED RESOURCE ELEMENT AND OPERATING METHOD THEREOF**

(57) An operating method of a wireless communication device operating in a narrowband Internet of things (IoT) communication standalone mode includes calculating a noise covariance of a target subframe based on signals received through unused resource elements in the target subframe, the target subframe being among a plurality of subframes included in a downlink signal, and the downlink signal being received from an external device, and estimating a signal-to-noise ratio (SNR) of the target subframe based on the noise covariance.

FIG. 3

EP 4 542 884 A1

**Description**

FIELD

The inventive concepts relate to a wireless communication device that calculates a signal-to-noise ratio (SNR) by using an unused resource element.

BACKGROUND

Lower-power longer-range communication technology is used in the field of Internet of Things (IoT) and has been proposed to satisfy conditions such as lower power consumption, lower-cost devices, lower establishment costs, stable coverage, and larger-scale device access. A typical example of the lower-power longer-range communication technology is narrowband IoT communication technology, and the narrowband IoT communication technology may provide a stable communication service without establishment of a separate network for IoT by using the existing Long Term Evolution (LTE) network that has already been established. Also, because the narrowband IoT communication technology supports communication using narrowband, it may also be used for satellite communication that involves lower-power longer-range communication.

In the narrowband IoT communication, an SNR is a metric used for channel estimation performance improvement, scenario identification, or the like, and improvements in the performance of a wireless communication device rely on accurate SNR estimation. In the narrowband IoT communication, a narrowband reference signal (NRS) may be used as a noise sample to estimate an SNR. However, the number of noise samples obtained through the NRS is insufficient to ensure the accuracy of SNR estimation.

SUMMARY

The inventive concepts provide a wireless communication device capable of more accurately estimating a signal-to-noise ratio (SNR) in narrowband Internet of Things (IoT) communication. Embodiments provide a method capable of accurately estimating an SNR.

According to an aspect of the inventive concepts, there is provided an operating method of a wireless communication device operating in a narrowband IoT communication standalone mode, the operating method including calculating a noise covariance of a target subframe based on signals received through unused resource elements in the target subframe, the target subframe being among a plurality of subframes included in a downlink signal, and the downlink signal being received from an external device, and estimating a signal-to-noise ratio (SNR) of the target subframe based on the noise covariance.

According to an aspect of the inventive concepts, there is provided a wireless communication device operating in a narrowband IoT communication standalone mode, the wireless communication device including processing circuitry configured to determine unused resource elements in a target subframe based on a type of the target subframe, the target subframe being included in a downlink signal received from an external device, and calculate a noise covariance of the target subframe based on signals received through the unused resource elements.

According to an aspect of the inventive concepts, there is provided an operating method of a wireless communication device operating in a narrowband Internet of things (IoT) communication standalone mode, the operating method including determining a type of a target subframe among a plurality of subframes, the plurality of subframes being included in a downlink signal received from an external device, determining unused resource elements in the target subframe based on the type of the target subframe, calculating a noise covariance of the target subframe based on signals received through the unused resource elements, and estimating a signal-to-noise ratio (SNR) of the target subframe based on the noise covariance.

At least some of the above and other features of the disclosure are set out in the claims.

BRIEF DESCRIPTION OF THE DRAWINGS

Embodiments will be more clearly understood from the following detailed description taken in conjunction with the accompanying drawings in which:

FIG. 1 is a diagram illustrating a wireless communication system according to embodiments;
FIG. 2 is a block diagram illustrating a wireless communication device according to embodiments;
FIG. 3 is a diagram illustrating a basic structure of a time-frequency domain that is a radio resource domain in a wireless communication system;
FIG. 4 is a diagram illustrating a subframe configuration of a downlink signal received by a wireless communication device, according to embodiments;

FIG. 5 is a diagram illustrating a resource grid of a subframe of a first type received, according to embodiments;

FIG. 6 is a diagram illustrating a resource grid of a subframe of a second type received by a wireless communication device, according to embodiments;

FIG. 7 is a diagram illustrating a resource grid of a subframe of a third type received by a wireless communication device, according to embodiments;

FIG. 8 is a diagram illustrating a resource grid of a subframe of a fourth type received by a wireless communication device, according to embodiments;

FIG. 9 is a flowchart illustrating an operating method of a wireless communication device according to embodiments;

FIG. 10 is a flowchart illustrating a particular method of calculating a noise covariance by a wireless communication device, according to embodiments;

FIG. 11 is a block diagram schematically illustrating an electronic device according to embodiments; and

FIG. 12 is a conceptual diagram illustrating an Internet of Things (IoT) network system according to embodiments.

## DETAILED DESCRIPTION

Hereinafter, embodiments will be described in detail with reference to the accompanying drawings.

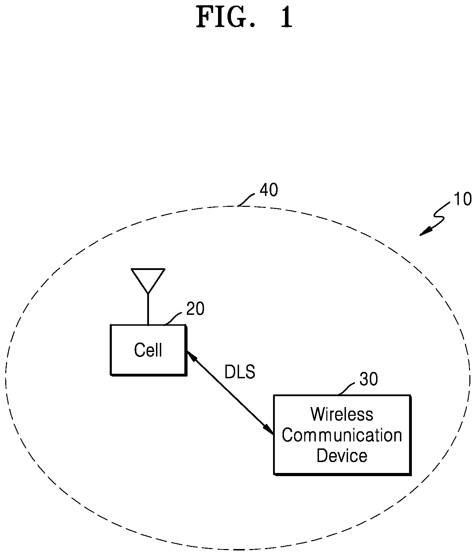

FIG. 1 is a diagram illustrating a wireless communication system according to embodiments.

Referring to FIG. 1, a wireless communication system 10 may include a cell 20 (or a serving cell) and/or a wireless communication device 30.

Hereinafter, embodiments in which the wireless communication system 10 is based on narrowband Internet of Things (IoT) communication will be mainly described; however, the inventive concepts are not limited thereto. Particularly, embodiments may be applied to various types of lower-power longer-range communication with similar technical backgrounds. Furthermore, embodiments may also be applied to other wireless communication systems (e.g., cellular communication systems such as Wireless Broadband (WiBro), Global System for Mobile communication (GSM), 5G, and 6G, or short-range communication systems such as Bluetooth and Near Field Communication (NFC)).

Also, various functions described below may be implemented or supported by artificial intelligence technology or one or more computer programs, and each of the programs may include computer-readable program code and may be implemented in a non-transitory computer-readable medium. The terms "application" and "program" may refer to one or more computer programs, software components, instruction sets, procedures, functions, objects, classes, instances, related data, or portions thereof suitable for implementation of suitable computer-readable program code. The term "computer-readable program code" may include all types of computer code including source code, object code, and execution code. The term "computer-readable medium" may refer to all types of computer-accessible mediums such as read only memories (ROMs), random access memories (RAMs), hard disk drives, compact disks (CD), digital video disks (DVDs), or any other types of memories. "Non-transitory" computer-readable mediums may exclude wired, wireless, optical, or other communication links that transmit temporary electrical or other signals, and the non-transitory computer-readable mediums may include mediums in which data may be permanently stored and mediums such as rewritable optical disks or erasable memory devices in which data may be stored and overwritten.

In embodiments described below, hardware approaches will be described as examples; however, because embodiments include technology using both hardware and software, embodiments do not exclude software-based approaches (e.g., approaches involving the combination of software and hardware).

The cell 20 may generally refer to a fixed station that communicates with the wireless communication device 30 or another base station (not illustrated). The cell 20 may exchange control information and data with the wireless communication device 30 or another cell by communicating therewith. For example, the cell 20 may be referred to as a Node B, an evolved Node B (eNB), a next-generation Node B (gNB), a sector, a site, a base transceiver system (BTS), an access point (AP), a relay node, a remote radio head (RRH), a radio unit (RU), a small cell, a wireless device, or the like.

The wireless communication device 30 may be fixed or mobile. The wireless communication device 30 may refer to any equipment that may transmit/receive data and/or control information to/from the cell 20 by communicating therewith. For example, the wireless communication device 30 may be referred to as a terminal, a terminal equipment, a mobile station (MS), a mobile terminal (MT), a user terminal (UT), a subscriber station (SS), a wireless device, a handheld device, or the like.

The cell 20 may transmit a downlink signal DLS including a plurality of subframes to the wireless communication device 30 within its coverage 40. Herein, the subframe may refer to a data signal transmitted through a time-frequency resource corresponding to the subframe.

The wireless communication device 30 may receive a downlink signal DLS transmitted from the cell 20. The downlink signal DLS may include a plurality of subframes. Hereinafter, a target subframe may refer to a subframe selected as a target for signal-to-noise ratio (SNR) estimation among a plurality of subframes included in the downlink signal DLS, and the plurality of subframes may be sequentially selected as a target subframe.

The wireless communication device 30 may operate in an in-band mode of simultaneously (or contemporaneously) performing Long Term Evolution (LTE) communication and narrowband IoT communication, and/or in a narrowband IoT communication standalone mode of performing only narrowband IoT communication and not performing LTE communication (e.g., a mode of the wireless communication device 30 in which the wireless communication device 30 is performing narrowband IoT communication without performing LTE communication).

Hereinafter, embodiments of a method of estimating an SNR when the wireless communication device 30 operates in the narrowband IoT communication standalone mode will be mainly described; however, the inventive concepts are not limited thereto. Particularly, embodiments may also be applied to wireless communication devices 30 with similar technical backgrounds.

In embodiments, when receiving a downlink signal including a plurality of subframes from the cell 20, the wireless communication device 30 operating in the narrowband IoT communication standalone mode may calculate a noise covariance of a target subframe among the plurality of subframes based on signals received through unused resource elements in the target subframe and estimate an SNR of the target subframe based on the noise covariance of the target subframe. As such, because the wireless communication device 30 according to embodiments estimates the SNR based on the signals received through the unused resource elements in the target subframe, the accuracy of SNR estimation may be improved.

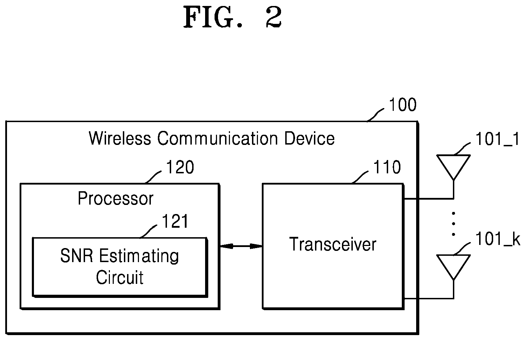

A particular structure and operating method of the wireless communication device 30 may be described with reference to FIG. 2 and the subsequent drawings.

FIG. 2 is a block diagram illustrating a wireless communication device according to embodiments.

Referring to FIG. 2, a wireless communication device 100 according to embodiments may include a plurality of antennas 101_1 to 101_k, a transceiver 110, and/or a processor 120.

The transceiver 110 may receive, through the antennas 101_1 to 101_k, a downlink signal transmitted from an external device (e.g., a cell). The transceiver 110 may downconvert the received downlink signal to generate intermediate frequency or baseband signals. Also, the transceiver 110 may upconvert the intermediate frequency or baseband signals output from the processor 120 and transmit the result as an uplink signal through the antennas 101_1 to 101_k.

The processor 120 may control an overall communication operation of the wireless communication device 100. The processor 120 may be implemented through a numeric processing unit (NPU), a graphics processing unit (GPU), or the like.

The processor 120 may generate data signals by filtering, decoding, and digitizing the intermediate frequency or baseband signals. The processor 120 may perform a certain operation based on the data signals. Also, the processor 120 may encode, multiplex, and analogize the data signals generated through the certain operation.

The processor 120 may include an SNR estimating circuit 121. The SNR estimating circuit 121 may perform SNR estimation according to embodiments. The operation of the SNR estimating circuit 121 described below may be understood as the operation of the processor 120. Particularly, the SNR estimating circuit 121 may be implemented as hardware or may be stored in a memory (not illustrated) in the form of program code executed by the processor 120 to perform channel estimation according to embodiments.

In embodiments, when the wireless communication device 100 operates in the narrowband IoT communication standalone mode, the SNR estimating circuit 121 may calculate a noise covariance of a target subframe based on signals received through unused resource elements in the target subframe among a plurality of subframes included in the downlink signal received from the external device through the transceiver 110. Next, the SNR estimating circuit 121 may estimate an SNR of the target subframe based on the noise covariance of the target subframe.

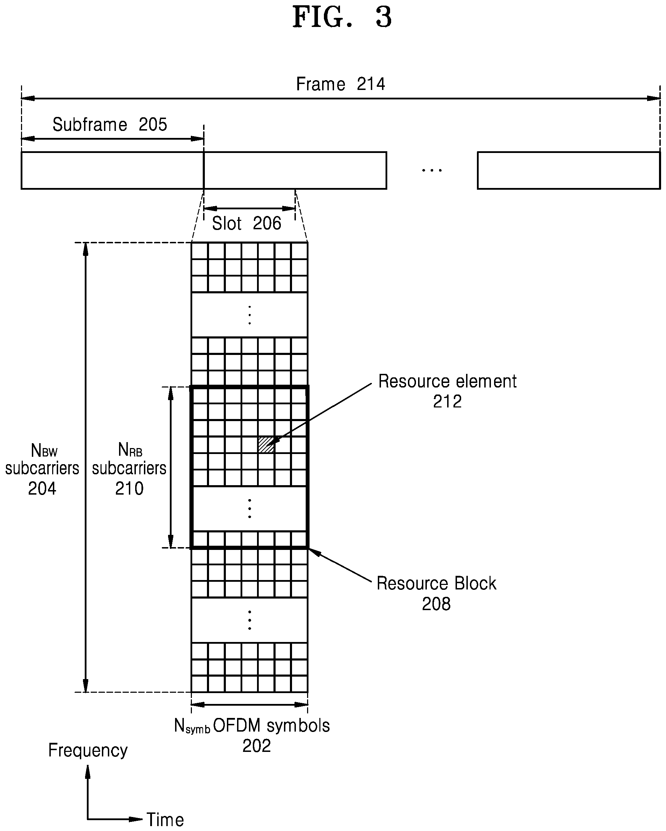

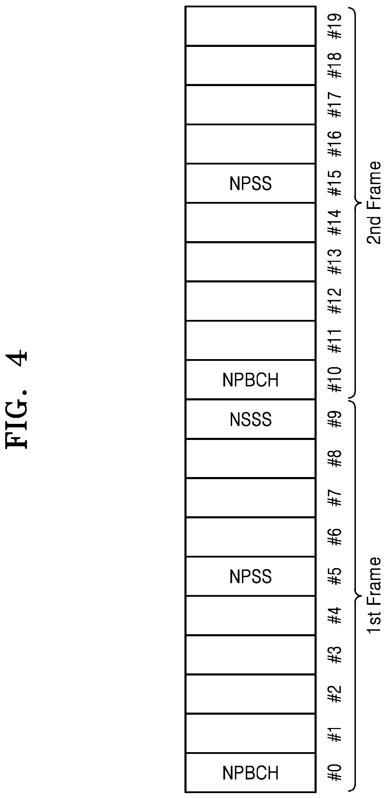

Particularly, the SNR estimating circuit 121 may determine the type of the target subframe to calculate the noise covariance of the target subframe. The SNR estimating circuit 121 may determine the type of the target subframe included in the downlink signal, based on a frame structure corresponding to a radio access technology used by the wireless communication device 100. In embodiments, the wireless communication device 100 may use LTE as a radio access technology, and the frame structure in the case where the radio access technology used by the wireless communication device 100 is LTE will be described in detail with reference to FIGS. 3 and 4.

FIG. 3 is a diagram illustrating a basic structure of a time-frequency domain that is a radio resource domain in a wireless communication system.

Referring to FIG. 3, a radio resource domain used in a wireless communication system may be seen. In the radio resource domain of FIG. 3, the horizontal axis may represent a time domain, and the vertical axis may represent a frequency domain.

A minimum (or smallest) transmission unit in the time domain may be an orthogonal frequency division multiplexing (OFDM) symbol, and $N_{symb}$ OFDM symbols 202 may be grouped to form a slot 206. Also, two slots may be grouped to form a subframe 205. In an example, the length of the slot 206 may be 0.5 ms, and the length of the subframe 205 may be 1.0 ms. However, this is merely an example, and the length of the slot 206 may vary depending on the configuration of the slot 206, and the number of slots 206 included in the subframe 205 may vary depending on the length of the slot 206. Also, a frame 214 may be a time-domain unit including 10 subframes 205.

A minimum (or smallest) transmission unit in the frequency domain may be a subcarrier, and the bandwidth of an entire system transmission band may include a total of $N_{BW}$ subcarriers 204.

In the time-frequency domain, the basic unit of resources may be a resource element 212 and may be represented by an OFDM symbol index and a subcarrier index. A resource block 208 may be defined as $N_{symb}$ consecutive OFDM symbols 202 in the time domain and $N_{RB}$ consecutive subcarriers 210 in the frequency domain. Thus, the resource block 208 may include ($N_{symb} \times N_{RB}$) resource elements 212. A resource block pair may be a unit of two RBs concatenated on the time axis and may include ($N_{symb} \times 2N_{RB}$) resource elements 212.

The basic structure of the time-frequency domain illustrated in FIG. 3 may be used in the narrowband IoT communication according to embodiments.

FIG. 4 is a diagram illustrating a subframe configuration of a downlink signal received by a wireless communication device, according to embodiments.

Referring to FIG. 4, a frame structure of a downlink signal received by the wireless communication device in the case where the radio access technology is LTE may be seen. However, the inventive concepts are not limited thereto, and the frame structure may follow the narrowband IoT-related standard specification of the 3rd Generation Partnership Project (3GPP) release.

In the example of FIG. 4, the frame structure may include a first frame and a second frame, and each frame may include 10 subframes. The 10 subframes included in the first frame may have indexes of 0 to 9 in temporal order, and the 10 subframes included in the second frame may have indexes of 10 to 19 in temporal order. In this case, the downlink signal received by the wireless communication device may be in the form of a repeated frame structure as illustrated in FIG. 4.

In embodiments of FIG. 4, a plurality of subframes included in the frame structure may be of any one of first to fourth types.

The first type may be a subframe including narrowband physical broadcast channel (NPBCH) resource elements, and in the example of FIG. 4, the NPBCH elements may be arranged in subframes with subframe indexes of 0 and 10.

The second type may be a subframe including narrowband primary synchronization signal (NPSS) resource elements, and in the example of FIG. 4, the NPSS resource elements may be arranged in subframes with subframe indexes 5 and 15.

The third type may be a subframe including narrowband secondary synchronization signal (NSSS) resource elements, and in the example of FIG. 4, the NSSS resource elements may be arranged in a subframe with a subframe index of 9.

The fourth type may be a subframe including narrowband physical downlink control channel (NPDCCH) resource elements or narrowband physical downlink shared channel (NPDSCH) resource elements, and in the example of FIG. 4, the NPDCCH resource elements and/or the NPDSCH resource elements may be arranged in subframes with subframe indexes of 1 to 4, 6 to 8, 11 to 14, and 16 to 19 (depictions of these elements are omitted from FIG. 4 for clarity of illustration).

Referring back to FIG. 2, based on the frame structure as in the example of FIG. 4, the SNR estimating circuit 121 may determine the type of the target subframe included in the downlink signal, based on which subframes have been previously received.

In embodiments, the type of the target subframe may be any one of the first to fourth types as described above with reference to FIG. 4. In this case, the target subframe of the first type may include NPBCH resource elements, the target subframe of the second type may include NPSS resource elements, the target subframe of the third type may include NSSS resource elements, and the target subframe of the fourth type may include NPDCCH resource elements or NPDSCH resource elements. According to embodiments, each of the first to fourth types of target subframes may correspond to the radio access technology used by the wireless communication device (e.g., narrowband IoT communication).

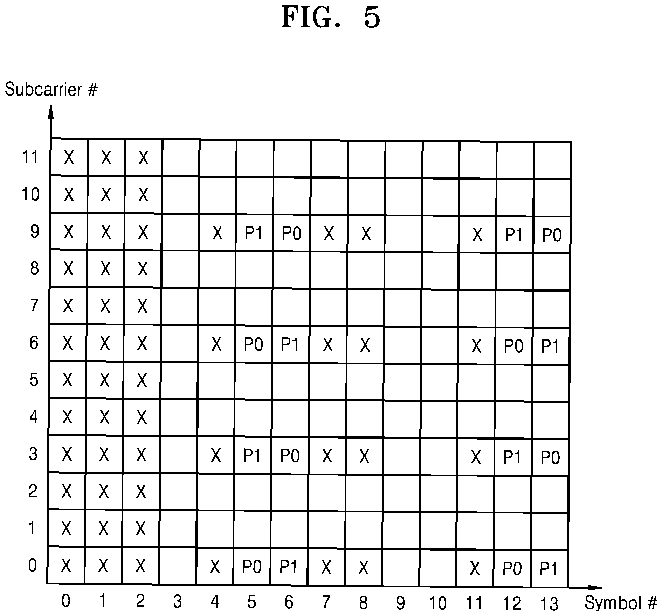

After determining the type of the target subframe, the SNR estimating circuit 121 may determine the unused resource elements in the target subframe based on the type of the target subframe. The SNR estimating circuit 121 may determine the unused resource elements in the target subframe based on a resource grid corresponding to the type of the target subframe. Examples of the resource grids in the respective cases where the types of the target subframe are the first to fourth types may be as illustrated in FIGS. 5 to 8.

FIG. 5 is a diagram illustrating a resource grid of a subframe of a first type received, according to embodiments.

Referring to FIG. 5, the resource grid in the case where the type of the subframe of the downlink signal is the first type when the wireless communication device 100 operates in the narrowband IoT communication standalone mode may be seen. In the resource grid of FIG. 5, the horizontal axis may represent a symbol index, and the vertical axis may represent a subcarrier index.

In the example of FIG. 5, a resource element marked with P0 in the resource element may refer to a first narrowband reference signal resource element transmitted by a first transmission port used in the narrowband IoT communication. A resource element marked with P1 in the resource element may refer to a second narrowband reference signal resource element transmitted by a second transmission port used in the narrowband IoT communication. A resource element marked with X in the resource element may refer to an unused resource element. A resource element without a mark in the resource element may refer to an NPBCH resource element.

In this case, because narrowband reference signals are transmitted through the first and second narrowband reference signal resource elements used for narrowband IoT communication, the wireless communication device 100 may receive a signal including noise in the narrowband reference signals through the first and second narrowband reference signal resource elements. Thus, when the target subframe is of the first type, the wireless communication device 100 may use the signals received through the narrowband reference signal resource elements, to calculate the noise covariance.

According to embodiments, as used herein the term "unused resource elements" may refer to resource elements of a subframe through which a signal (e.g., a data signal, such as an NPBCH, NPSS, NSSS, NPDCCH, NPDSCH, etc.) is not transmitted (e.g., by the external device). Because a signal is not transmitted through the unused resource elements included in the subframe, the wireless communication device 100 may receive signals including only noise through the unused resource elements. In other words, the unused resource elements contain only noise, i.e., not any data signal. Thus, when the target subframe is of the first type, the wireless communication device 100 may use the signals received through the unused resource elements, to calculate the noise covariance.

As described below, when the type of the target subframe is the first type in the narrowband IoT communication standalone mode, the wireless communication device 100 according to embodiments may use both the signals received through the narrowband reference signal resource elements and the signals received through the unused resource elements, to calculate the noise covariance, such that the accuracy of SNR estimation may be improved.

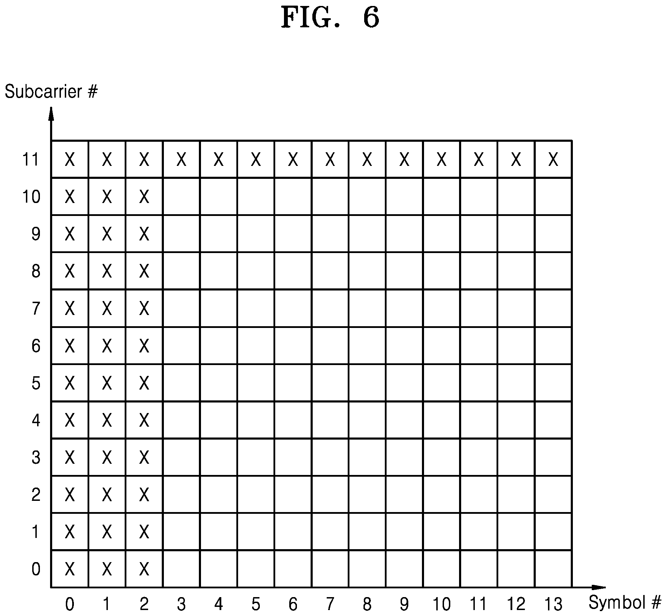

FIG. 6 is a diagram illustrating a resource grid of a subframe of a second type received by a wireless communication device, according to embodiments.

Referring to FIG. 6, the resource grid in the case where the type of the subframe of the downlink signal is the second type when the wireless communication device 100 operates in the narrowband IoT communication standalone mode may be seen. In the resource grid of FIG. 6, the horizontal axis may represent a symbol index, and the vertical axis may represent a subcarrier index.

In the example of FIG. 6, a resource element marked with X in the resource element may refer to an unused resource element. A resource element without a mark in the resource element may refer to an NPSS resource element.

In this case, because a signal is not transmitted through the unused resource elements included in the subframe, the wireless communication device 100 may receive signals including only noise through the unused resource elements. Thus, when the target subframe is of the second type, the wireless communication device 100 may use the signals received through the unused resource elements, to calculate the noise covariance.

As described below, when the type of the target subframe is the second type in the narrowband IoT communication standalone mode, the wireless communication device 100 according to embodiments may use the signals received through the unused resource elements, to calculate the noise covariance, such that an SNR may be estimated even in a subframe in which a narrowband reference signal is not received. In other words, only unused resource elements may be received.

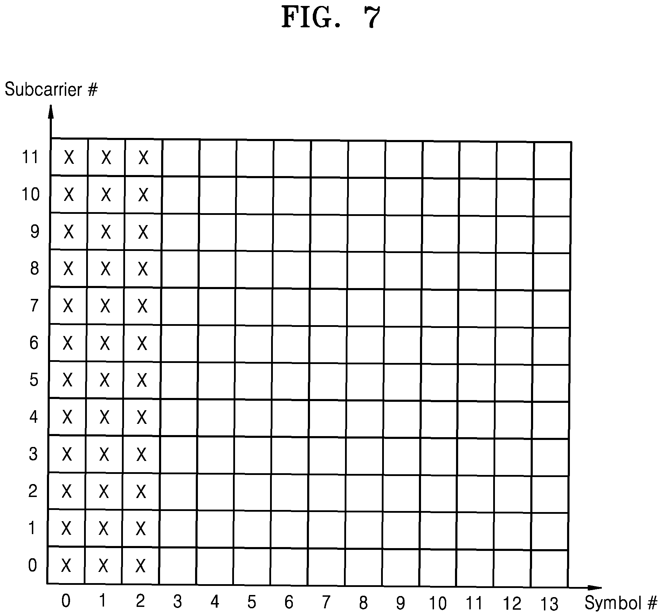

FIG. 7 is a diagram illustrating a resource grid of a subframe of a third type received by a wireless communication device, according to embodiments.

Referring to FIG. 7, the resource grid in the case where the type of the subframe of the downlink signal is the third type when the wireless communication device 100 operates in the narrowband IoT communication standalone mode may be seen. In the resource grid of FIG. 7, the horizontal axis may represent a symbol index, and the vertical axis may represent a subcarrier index.

In the example of FIG. 7, a resource element marked with X in the resource element may refer to an unused resource element. A resource element without a mark in the resource element may refer to an NSSS resource element.

In this case, because a signal is not transmitted through the unused resource elements included in the subframe, the wireless communication device 100 may receive signals including only noise through the unused resource elements. Thus, when the target subframe is of the third type, the wireless communication device 100 may use the signals received through the unused resource elements, to calculate the noise covariance.

As described below, when the type of the target subframe is the third type in the narrowband IoT communication standalone mode, the wireless communication device 100 according to embodiments may use the signals received through the unused resource elements, to calculate the noise covariance, such that an SNR may be estimated even in a subframe in which a narrowband reference signal is not received.

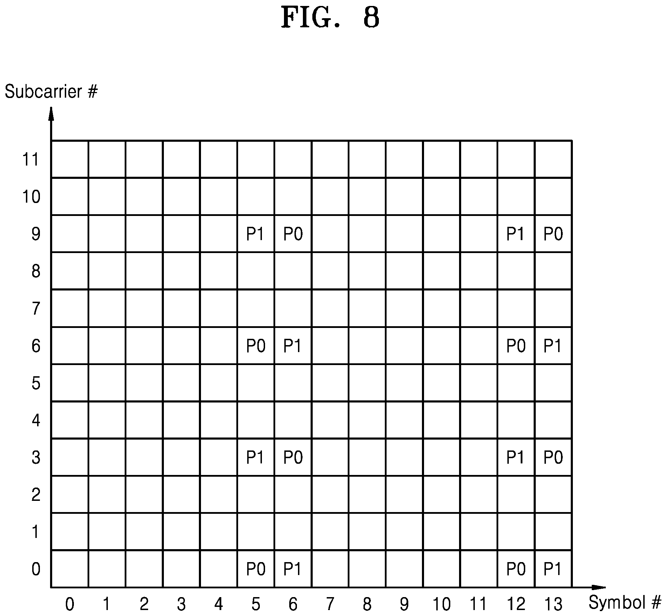

FIG. 8 is a diagram illustrating a resource grid of a subframe of a fourth type received by a wireless communication device, according to embodiments.

Referring to FIG. 8, the resource grid in the case where the type of the subframe of the downlink signal is the fourth type when the wireless communication device 100 operates in the narrowband IoT communication standalone mode may be seen. In the resource grid of FIG. 8, the horizontal axis may represent a symbol index, and the vertical axis may represent a subcarrier index.

In the example of FIG. 8, a resource element marked with P0 in the resource element may refer to a first narrowband reference signal resource element transmitted by a first transmission port used in the narrowband IoT communication. A resource element marked with P1 in the resource element may refer to a second narrowband reference signal resource element transmitted by a second transmission port used in the narrowband IoT communication. A resource element without a mark in the resource element may refer to an NPDCCH resource element or an NPDSCH resource element.

In this case, because narrowband reference signals are transmitted through the first and second narrowband reference signal resource elements used for narrowband IoT communication, the wireless communication device 100 may receive a signal including noise in the narrowband reference signals through the first and second narrowband reference signal resource elements. Thus, when the target subframe is of the fourth type, the wireless communication device 100 may use the signals received through the narrowband reference signal resource elements, to calculate the noise covariance.

Referring to FIGS. 5 to 8, the structures of the resource grids according to the types of the subframe described above are merely examples, and the inventive concepts are not limited thereto, and the structure of the resource grid according to the type of the subframe may follow the narrowband IoT-related standard specification of the 3GPP release. According to embodiments, the SNR estimating circuit 121 may determine the type of target subframe from among the first to fourth types by detecting one or more of the above resource elements (e.g., NPBCH resource elements, NPSS resource elements, NSSS resource elements, NPDCCH resource elements and/or NPDSCH resource elements) at positions in the resource grid corresponding to one of the first to fourth types of subframe as discussed in connection with FIGS. 5 to 8.

Also, embodiments in which both the first and second transmission ports are used in the narrowband IoT communication such that narrowband reference signals are received through both the first and second narrowband reference signal resource elements will be mainly described; however, the inventive concepts are not limited thereto, and the examples may be modified and applied to embodiments in which only one of the first and/or second transmission ports is used.

Referring back to FIG. 2, after determining the unused resource elements in the target subframe, the SNR estimating circuit 121 may calculate the noise covariance of the target subframe based on the signals received through the unused resource elements in the target subframe.

The SNR estimating circuit 121 may calculate the noise covariance of the target subframe by using the following equations.

First, a signal received through the transceiver 110 of the wireless communication device 100 may be generally represented as Equation 1 below.

$$[\text{Equation 1}]$$

$$y = Hx + n$$

In Equation 1, "y" may denote a reception signal received through the transceiver 110, "x" may denote a transmission signal transmitted by the external device, "H" may denote a channel value through which the transmission signal has passed, and "n" may denote a noise signal.

The noise covariance may be generally calculated as in Equation 2 below.

$$[\text{Equation 2}]$$

$$R = E\{nn^H\}$$

In Equation 2, "R" may denote a noise covariance.

Because the SNR estimating circuit 121 uses a channel estimate value as the channel value through which the transmission signal has passed, the noise covariance may be calculated as in Equation 3 below.

$$[\text{Equation 3}]$$

$$\hat{R} = E\{(y - \hat{H}x)(y - \hat{H}x)^H\}$$

In Equation 3, $\hat{H}$ may denote a channel estimate value, and $\hat{R}$ may denote a noise covariance calculated based on the channel estimation value.

In this case, when the type of the target subframe is the first type, because the target subframe includes the narrowband reference signal resource elements (including the first and second narrowband reference signal resource elements) and the unused resource elements, the noise covariance may be calculated as in Equation 4 below.

[Equation 4]

$$\widehat{R} = \widehat{R}_{NRS} + \widehat{R}_{NUS}$$

In Equation 4, $\hat{R}_{NRS}$ may denote a narrowband reference signal noise covariance that is a noise covariance calculated based on the signals received through the narrowband reference signal resource elements in the target subframe, and $\hat{R}_{NUS}$ may denote an unused noise covariance that is a noise covariance calculated based on the channel estimation value and the signals received through the unused resource elements in the target subframe.

In this case, $\hat{R}_{NRS}$ may be calculated as in Equation 5 below.

[Equation 5]

$$\widehat{R}_{NRS} = \frac{1}{|\Omega_{NRS}|} \sum_{(k,l)\in\Omega_{NRS}} (y(k,l) - \widehat{H}(k,l)x(k,l))(y(k,l) - \widehat{H}(k,l)x(k,l))^{H}$$

In Equation 5, $\Omega_{NRS}$ may denote a set including the narrowband reference signal resource elements included in the target subframe, $|\Omega_{NRS}|$ may denote the total number of narrowband reference signal resource elements included in the target subframe, "k" may denote a symbol index of the narrowband reference signal resource elements included in the target subframe, and "l" may denote a subcarrier index of the narrowband reference signal resource elements included in the target subframe. In this case, "x" may denote a narrowband reference signal transmitted by the external device, and a reference signal sequence precalculated (or alternatively, given or calculated) by the SNR estimating circuit 121 may be used as a narrowband reference signal "x" transmitted by the external device. According to embodiments, the channel estimation value $\hat{H}$ may be calculated based on the signals received through the narrowband reference signal resource elements in the target subframe. For example, the channel estimation value may be calculated based on the noise obtained by performing inverse fast Fourier transform (IFFT) on the signals received through the narrowband reference signal resource elements and filtering a main portion in the time-domain signal obtained through IFFT.

Because the transmission signal transmitted through the unused resource element is 0 and the reception signal is the same as (or similar to) the noise signal, $\hat{R}_{NUS}$ may be calculated as in Equation 6 below.

[Equation 6]

$$\widehat{R}_{NUS} = \frac{1}{|\Omega_{NUS}|} \sum_{(k,l)\in\Omega_{NUS}} y(k,l)y(k,l)^{H}$$

In Equation 6, $\Omega_{NUS}$ may denote a set including the unused resource elements included in the target subframe, $|\Omega_{NUS}|$ may denote the total number of unused resource elements included in the target subframe, "k" may denote a symbol index of the unused resource elements included in the target subframe, and "l" may denote a subcarrier index of the unused resource elements included in the target subframe.

By using the above equations, the SNR estimating circuit 121 may calculate the noise covariance of the target subframe based on the signals received through the resource elements according to the type of the target subframe.

In embodiments, when the type of the target subframe is the first type, the SNR estimating circuit 121 may calculate the noise covariance of the target subframe based on the signals received through the unused resource elements in the target subframe and the signals received through the narrowband reference signal resource elements in the target subframe.

Particularly, when the type of the target subframe is the first type, the target subframe may include narrowband reference signal resource elements and unused resource elements.

The SNR estimating circuit 121 may calculate the unused noise covariance based on the signals received through the unused resource elements in the target subframe. In this case, the SNR estimating circuit 121 may calculate the unused noise covariance by using Equation 6. According to embodiments, the SNR estimating circuit 121 may calculate the unused noise covariance based on the signals received through the unused resource elements in response to determining that the target subframe includes unused resource elements (e.g., in response to determining that the target subframe is the first type, the second type or the third type).

Also, the SNR estimating circuit 121 may calculate the narrowband reference signal noise covariance based on the precalculated (or alternatively, given or calculated) reference signal sequence and the channel estimation value calculated based on the signals received through the narrowband reference signal resource elements in the target subframe. Here, the channel estimation value may be calculated based on the noise obtained by performing inverse fast Fourier transform (IFFT) on the signals received through the narrowband reference signal resource elements and filtering a main portion in the time-domain signal obtained through IFFT. In this case, the SNR estimating circuit 121 may calculate the narrowband reference signal noise covariance by using Equation 5. According to embodiments, the SNR estimating circuit 121 may calculate the narrowband reference signal noise covariance based on the signals received through the narrowband reference signal resource elements in response to determining that the target subframe includes narrowband reference signal resource elements (e.g., in response to determining that the target subframe is the first type or the fourth type).

Next, the SNR estimating circuit 121 may calculate the noise covariance by adding the unused noise covariance and the narrowband reference signal noise covariance. That is, the SNR estimating circuit 121 may calculate the unused noise covariance by using Equation 4. According to embodiments, the SNR estimating circuit 121 may calculate the noise covariance by adding the unused noise covariance and the narrowband reference signal noise covariance in response to determining that the target subframe is the first type.

In embodiments, when the type of the target subframe is the second type or the third type, the SNR estimating circuit 121 may calculate the noise covariance of the target subframe based on the signals received through the unused resource elements in the target subframe.

Particularly, when the type of the target subframe is the second type or the third type, the target subframe may include unused resource elements.

The SNR estimating circuit 121 may calculate the unused noise covariance based on the signals received through the unused resource elements in the target subframe. In this case, the SNR estimating circuit 121 may calculate the unused noise covariance by using Equation 6. According to embodiments, the SNR estimating circuit 121 may calculate the unused noise covariance based on the signals received through the unused resource elements in response to determining that the target subframe includes unused resource elements (e.g., in response to determining that the target subframe is the first type, the second type or the third type).

In this case, because the target subframe does not include narrowband reference signal resource elements, the SNR estimating circuit 121 may use the unused noise covariance as the noise covariance. According to embodiments, the SNR estimating circuit 121 may use the unused noise covariance as the noise covariance in response to determining that the target subframe is the second type or the third type.

In embodiments, when the type of the target subframe is the fourth type, the SNR estimating circuit 121 may calculate the noise covariance of the target subframe based on the signals received through the narrowband reference signal resource elements in the target subframe.

Particularly, when the type of the target subframe is the fourth type, the target subframe may include narrowband reference signal resource elements. According to embodiments, the SNR estimating circuit 121 may calculate the narrowband reference signal noise covariance based on the signals received through the narrowband reference signal resource elements in response to determining that the target subframe includes narrowband reference signal resource elements (e.g., in response to determining that the target subframe is the first type or the fourth type).

The SNR estimating circuit 121 may calculate the narrowband reference signal noise covariance based on the precalculated (or alternatively, given or calculated) reference signal sequence and the channel estimation value calculated based on the signals received through the narrowband reference signal resource elements in the target subframe. In this case, the SNR estimating circuit 121 may calculate the narrowband reference signal noise covariance by using Equation 5.

In this case, because the target subframe does not include unused resource elements, the SNR estimating circuit 121 may use the narrowband reference signal noise covariance as the noise covariance. According to embodiments, the SNR estimating circuit 121 may use the narrowband reference signal noise covariance as the noise covariance in response to determining that the target subframe is the second type or the fourth type.

While certain equations have been described to calculate noise covariance, one of skill in the art will appreciate that variations are possible. For example, the covariance may be calculated utilizing machine learning technologies in which neural networks or deep learning are trained to learn underlying patterns and estimate the covariance.

Next, the SNR estimating circuit 121 may estimate an SNR of the target subframe based on the noise covariance of the target subframe. In this case, the SNR estimating circuit 121 may estimate an SNR of the target subframe by calculating an SNR based on the noise covariance by using a known general SNR calculation method.

The processor 120 may perform various types of subsequent operations based on the SNR of the target subframe estimated by the SNR estimating circuit 121. In embodiments, the processor 120 may perform symbol detection of the target subframe based on the SNR of the target subframe estimated by the SNR estimating circuit 121 (e.g., to detect a symbol transmitted by the external device via the target subframe). Also, in embodiments, the processor 120 may perform channel estimation of the target subframe based on the SNR of the target subframe estimated by the SNR estimating circuit 121 (e.g., to estimate a channel between the wireless communication device 100 and the external device through which the target subframe was received by the wireless communication device 100).

By using the wireless communication device 100 according to embodiments described above, the accuracy of SNR estimation may be improved by using both the signals received through the narrowband reference signal resource elements and the signals received through the unused resource elements, to calculate the noise covariance. Also, by using the signals received through the unused resource elements, to calculate the noise covariance, an SNR may be estimated even in a subframe in which a narrowband reference signal is not received. Also, as described above, by improving the accuracy of SNR estimation and performing SNR estimation in various environments, the performance of subsequent operations such as symbol detection and channel estimation performed based on an SNR may be improved.

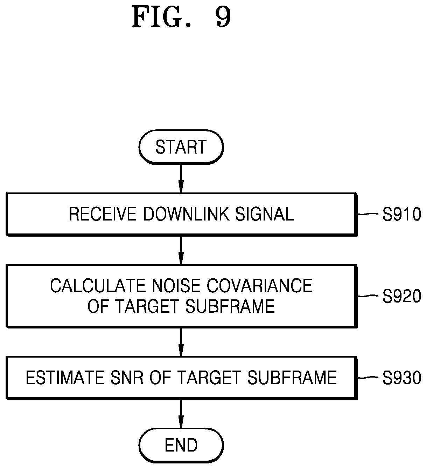

FIG. 9 is a flowchart illustrating an operating method of a wireless communication device according to embodiments.

Referring to FIG. 9, in operation S910, the wireless communication device 100 may receive a downlink signal.

The wireless communication device 100 may receive a downlink signal including a plurality of subframes from the external device through the transceiver 110.

In operation S920, the wireless communication device 100 may calculate the noise covariance of the target subframe.

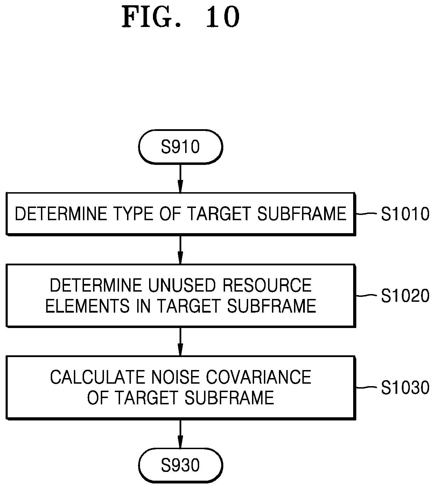

The wireless communication device 100 may calculate, through the processor 120, the noise covariance of the target subframe among the plurality of subframes based on the signals received through the unused resource elements in the target subframe. A particular method of calculating the noise covariance of the target subframe will be described in detail with reference to FIG. 10.

FIG. 10 is a flowchart illustrating a particular method of calculating a noise covariance by a wireless communication device, according to embodiments.

Referring to FIG. 10, in operation S 1010, the wireless communication device 100 may determine the type of the target subframe.

The wireless communication device 100 may determine, through the processor 120, the type of the target subframe included in the downlink signal based on the frame structure corresponding to the radio access technology used by the wireless communication device 100. The wireless communication device 100 may determine the type of the target subframe as one of the first to fourth types.

In operation S 1020, the wireless communication device 100 may determine the unused resource elements in the target subframe.

The wireless communication device 100 may determine, through the processor 120, the unused resource elements in the target subframe based on the resource grid corresponding to the type of the target subframe.

When the type of the target subframe is the first type, the wireless communication device 100 may determine the unused resource elements in the target subframe based on the resource grid illustrated in FIG. 5. When the type of the target subframe is the second type, the wireless communication device 100 may determine the unused resource elements in the target subframe based on the resource grid illustrated in FIG. 6. When the type of the target subframe is the third type, the wireless communication device 100 may determine the unused resource elements in the target subframe based on the resource grid illustrated in FIG. 7. When the type of the target subframe is the fourth type, the wireless communication device 100 may determine the unused resource elements in the target subframe based on the resource grid illustrated in FIG. 8 (e.g., may determine that the target subframe does not include unused resource elements).

In operation S1030, the wireless communication device 100 may calculate the noise covariance of the target subframe.

The wireless communication device 100 may calculate, through the processor 120, the noise covariance of the target subframe based on the signals received through the unused resource elements in the target subframe determined in operation S 1020.

When the type of the target subframe is the first type, the wireless communication device 100 may calculate the noise covariance of the target subframe based on the signals received through the unused resource elements in the target subframe and the signals received through the narrowband reference signal resource elements in the target subframe. In this case, the wireless communication device 100 may calculate the noise covariance of the target subframe by using Equations 4 to 6.

When the type of the target subframe is the second type or the third type, the wireless communication device 100 may calculate the noise covariance of the target subframe based on the signals received through the unused resource elements in the target subframe. In this case, the wireless communication device 100 may calculate the noise covariance of the target subframe by using Equation 6.

When the type of the target subframe is the fourth type, the wireless communication device 100 may calculate the noise covariance of the target subframe based on the signals received through the narrowband reference signal resource elements in the target subframe. In this case, the wireless communication device 100 may calculate the noise covariance of the target subframe by using Equation 5.

Referring back to FIG. 9, in operation S930, the wireless communication device 100 may estimate an SNR of the target subframe. The wireless communication device 100 may estimate, through the processor 120, the SNR of the target subframe by using the noise covariance calculated in operation S920.

By using the operating method of the wireless communication device 100 according to embodiments described above, the accuracy of SNR estimation may be improved by using both the signals received through the narrowband reference signal resource elements and the signals received through the unused resource elements, to calculate the noise covariance.

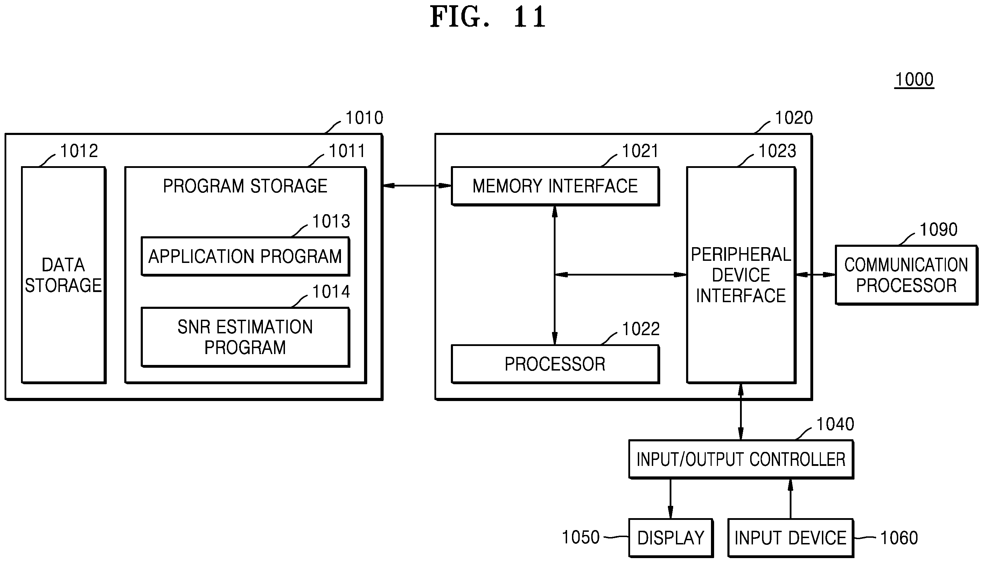

FIG. 11 is a block diagram schematically illustrating an electronic device according to embodiments.

Referring to FIG. 11, an electronic device 1000 may include a memory 1010, a processor unit 1020, an input/output controller 1040, a display 1050, an input device 1060, and/or a communication processor 1090. Here, the memory 1010 may be provided as a plurality of memories. Each component thereof will be described below.

The memory 1010 may include a program storage 1011 storing a program for controlling an operation of the electronic device 1000 and a data storage 1012 storing data generated during execution of the program. The data storage 1012 may store data used for the operation of an application program 1013 and an SNR estimation program 1014, or may store data generated from the operation of the application program 1013 and the SNR estimation program 1014.

The program storage 1011 may include the application program 1013 and the SNR estimation program 1014. Here, each of the programs included in the program storage 1011 may be a set of instructions and may be represented as an instruction set. The application program 1013 may include program codes for executing various applications operating in the electronic device 1000. That is, the application program 1013 may include codes (or commands) related to various applications driven by a processor 1022.

According to embodiments, when receiving a downlink signal including a plurality of subframes when operating in the narrowband IoT communication standalone mode, the SNR estimation program 1014 may calculate a noise covariance of the target subframe among the plurality of subframes based on the signals received through the unused resource elements in the target subframe and estimate an SNR of the target subframe based on the noise covariance of the target subframe.

Moreover, the electronic device 1000 may include the communication processor 1090 performing a communication function for voice communication and data communication. A peripheral device interface 1023 may control the connection between the input/output controller 1040, the communication processor 1090, the processor 1022, and/or a memory interface 1021. By using at least one software program, the processor 1022 may control a plurality of base stations to provide a corresponding service. In this case, the processor 1022 may execute at least one program stored in the memory 1010 and provide a service corresponding to the program.

The input/output controller 1040 may provide an interface between the peripheral device interface 1023 and an input/output device such as the display 1050 and the input device 1060. The display 1050 may display status information, input text, moving pictures, still pictures, and the like. For example, the display 1050 may display application program information driven by the processor 1022.

The input device 1060 may provide input data generated by selection by the electronic device 1000, to the processor unit 1020 through the input/output controller 1040. In this case, the input device 1060 may include a keypad including at least one hardware button and a touch pad for sensing touch information. For example, the input device 1060 may provide touch information such as a touch, a touch movement, and a touch release sensed through the touch pad, to the processor 1022 through the input/output controller 1040.

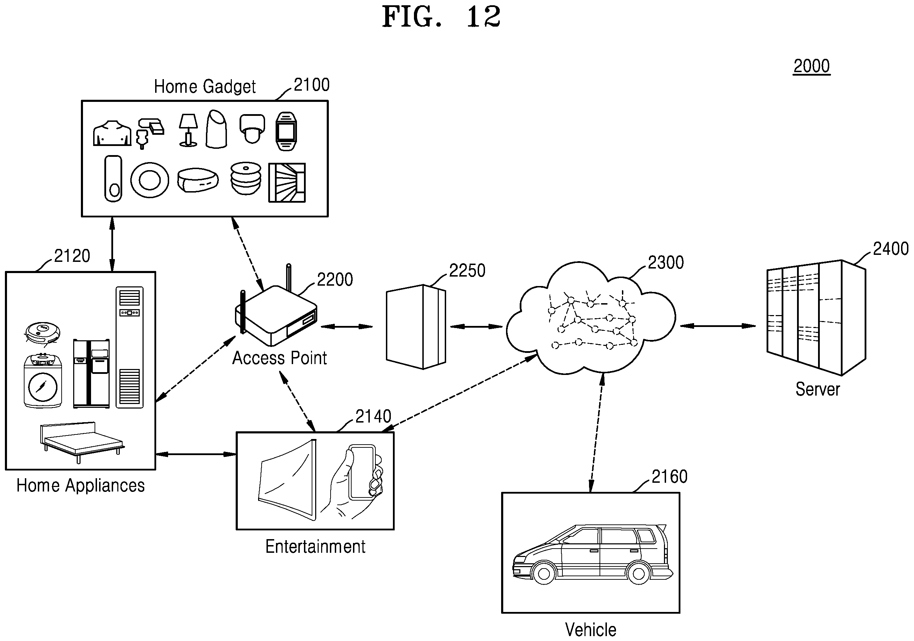

FIG. 12 is a conceptual diagram illustrating an IoT network system according to embodiments.

Referring to FIG. 12, an IoT network system 2000 may include a plurality of IoT equipments 2100, 2120, 2140, and/or 2160, an access point 2200, a gateway 2250, a wireless network 2300, and/or a server 2400. The IoT may refer to a network between things using wired/wireless communication.

Each of the IoT equipments 2100, 2120, 2140, and 2160 may form a group according to the characteristics of each IoT equipment. For example, the IoT equipments 2100, 2120, 2140, and 2160 may be grouped into a home gadget group 2100, a home appliance/furniture group 2120, an entertainment group 2140, a vehicle group 2160, or the like. A plurality of IoT equipments 2100, 2120, and 2140 may be connected to a communication network or to another IoT equipment through the access point 2200. The access point 2200 may be built in one IoT equipment. The gateway 2250 may change the protocol to connect the access point 2200 to an external wireless network. The IoT equipments 2100, 2120, and 2140 may be connected to an external communication network through the gateway 2250. The wireless network 2300 may include the Internet and/or a public network. The plurality of IoT equipments 2100, 2120, 2140, and 2160 may be connected through the wireless network 2300 to the server 2400 providing a certain service, and the user may use a service through at least one of the plurality of IoT equipments 2100, 2120, 2140, and 2160.

According to embodiments, the plurality of IoT equipments 2100, 2120, 2140, and 2160 may perform narrowband IoT communication, and accordingly, when receiving a downlink signal including a plurality of subframes when operating in the narrowband IoT communication standalone mode, each of the IoT equipments 2100, 2120, 2140, and 2160 may calculate a noise covariance of the target subframe based on the signals received through the unused resource elements in the target subframe among the plurality of subframes and estimate an SNR of the target subframe based on the noise covariance of the target subframe. Accordingly, because the IoT equipments 2100, 2120, 2140, and 2160 estimate the SNR based on the signals received through the unused resource elements in the target subframe, the accuracy of SNR estimation may be improved.

Existing devices and methods for calculating a noise covariance of a subframe in narrowband IoT communication rely on narrowband reference signals as noise samples. However, such narrowband reference signals do not provide a sufficient quantity of noise samples (e.g., due to an insufficient quantity of narrowband reference signals) to accurately calculate the noise covariance. As such, the existing devices and methods are unable to estimate a signal-to-noise-ratio (SNR) of a subframe in narrowband IoT communication with sufficient accuracy, which also results in insufficient accuracy of operations performed based on the estimated SNR such as symbol detection and channel estimation.

However, embodiments provide improved devices and methods for calculating a noise covariance of a subframe in narrowband IoT communication. For example, the improved devices and methods may utilize unused resource elements in a target subframe as noise samples in calculating the noise covariance in the target subframe. Accordingly, in target subframes having both narrowband reference signals and unused resource elements, the improved devices and methods may calculate the noise covariance of the target subframe more accurately due to the increased number of noise samples. Also, in target subframes having unused resource elements without having narrowband reference signals, the improved devices and methods may accurately calculate the noise covariance of the target subframe in a scenario in which the existing devices and methods would be unable to calculate the noise covariance. Therefore, the improved devices and methods overcome the deficiencies of the conventional devices and methods to improve the accuracy of a calculated noise covariance, thereby improving the accuracy of an SNR estimated using the calculated noise covariance as well as improving the accuracy of operations performed based on the estimated SNR, such as symbol detection and channel estimation.

According to embodiments, operations described herein as being performed by the a wireless communication system 10, the cell 20, the wireless communication device 30, the wireless communication device 100, the transceiver 110, the processor 120, the SNR estimating circuit 121, the electronic device 1000, the processor unit 1020, the input/output controller 1040, the communication processor 1090, the application program 1013, the SNR estimation program 1014, the peripheral device interface 1023, the processor 1022, the memory interface 1021, the IoT network system 2000, each among the plurality of IoT equipments 2100, 2120, 2140, and/or 2160, the access point 2200, the gateway 2250 and/or the server 2400 may be performed by processing circuitry. The term 'processing circuitry,' as used in the present disclosure, may refer to, for example, hardware including logic circuits; a hardware/software combination such as a processor executing software; or a combination thereof. For example, the processing circuitry more specifically may include, but is not limited to, a central processing unit (CPU), an arithmetic logic unit (ALU), a digital signal processor, a microcomputer, a field programmable gate array (FPGA), a System-on-Chip (SoC), a programmable logic unit, a microprocessor, application-specific integrated circuit (ASIC), etc.

The various operations of methods described above may be performed by any suitable device capable of performing the operations, such as the processing circuitry discussed above. For example, as discussed above, the operations of methods described above may be performed by various hardware and/or software implemented in some form of hardware (e.g., processor, ASIC, etc.).

The software may comprise an ordered listing of executable instructions for implementing logical functions, and may be embodied in any "processor-readable medium" for use by or in connection with an instruction execution system, apparatus, or device, such as a single or multiple-core processor or processor-containing system.

The blocks or operations of a method or algorithm and functions described in connection with embodiments disclosed herein may be embodied directly in hardware, in a software module executed by a processor, or in a combination of the two. If implemented in software, the functions may be stored on or transmitted over as one or more instructions or code on a tangible, non-transitory computer-readable medium (the memory 1010). A software module may reside in Random Access Memory (RAM), flash memory, Read Only Memory (ROM), Electrically Programmable ROM (EPROM), Electrically Erasable Programmable ROM (EEPROM), registers, hard disk, a removable disk, a CD ROM, or any other form of storage medium known in the art.

While the inventive concepts have been particularly shown and described with reference to embodiments thereof, it will be understood that various changes in form and details may be made therein without departing from the scope of the following claims.

## Claims

1. An operating method of a wireless communication device operating in a narrowband Internet of things (IoT) communication standalone mode, the operating method comprising:

   calculating a noise covariance of a target subframe based on signals received through unused resource elements in the target subframe, the target subframe being among a plurality of subframes included in a downlink signal, and the downlink signal being received from an external device; and

estimating a signal-to-noise ratio (SNR) of the target subframe based on the noise covariance.

2. The operating method of claim 1, wherein the calculating of the noise covariance comprises:

   determining a type of the target subframe; and
   determining the unused resource elements based on the type of the target subframe.

3. The operating method of claim 2, wherein the determining of the type of the target subframe comprises determining the type of the target subframe based on a frame structure corresponding to a radio access technology used by the wireless communication device.

4. The operating method of claim 3, wherein the type of the target subframe is one of:

   a first type in which the target subframe includes narrowband physical broadcast channel (NPBCH) resource elements;
   a second type in which the target subframe includes narrowband primary synchronization signal (NPSS) resource elements;
   a third type in which the target subframe includes narrowband secondary synchronization signal (NSSS) resource elements; or
   a fourth type in which the target subframe includes narrowband physical downlink control channel (NPDCCH) resource elements or narrowband physical downlink shared channel (NPDSCH) resource elements.

5. The operating method of any of claims 2 to 4, wherein the determining of the unused resource elements comprises determining the unused resource elements based on a resource grid corresponding to the type of the target subframe.

6. The operating method of claim 2, wherein the calculating of the noise covariance comprises calculating the noise covariance based on the signals received through the unused resource elements and signals received through narrowband reference signal resource elements in the target subframe.

7. The operating method of claim 6, wherein the calculating of the noise covariance comprises:

   calculating an unused noise covariance based on the signals received through the unused resource elements;
   calculating a narrowband reference signal noise covariance based on a reference signal sequence and a channel estimation value, the channel estimation value being calculated based on the signals received through the narrowband reference signal resource elements; and
   calculating the noise covariance by adding the unused noise covariance and the narrowband reference signal noise covariance.

8. The operating method of claim 2, wherein the calculating of the noise covariance comprises calculating the noise covariance based on the signals received through the unused resource elements in response to determining that the target subframe is of a type that includes the unused resource elements.

9. The operating method of any preceding claim, further comprising:
   performing channel estimation on the target subframe based on the SNR.

10. The operating method of any preceding claim, further comprising:
    performing symbol detection of the target subframe based on the SNR.

11. A wireless communication device operating in a narrowband Internet of things (IoT) communication standalone mode, the wireless communication device comprising:
    processing circuitry configured to

    determine unused resource elements in a target subframe based on a type of the target subframe, the target subframe being included in a downlink signal received from an external device, and
    calculate a noise covariance of the target subframe based on signals received through the unused resource elements.

12. The wireless communication device of claim 11, wherein the processing circuitry is configured to determine the

**EP 4 542 884 A1**

unused resource elements based on a resource grid corresponding to the type of the target subframe.

13. The wireless communication device of claim 11 or 12, wherein the processing circuitry is configured to calculate the noise covariance based on the signals received through the unused resource elements and signals received through narrowband reference signal resource elements in the target subframe.

14. The wireless communication device of claim 11 or 12, wherein the processing circuitry is configured to calculate the noise covariance of the target subframe based on the signals received through the unused resource elements in response to determining that the target subframe is of a type that includes the unused resource elements.

15. The wireless communication device of any of claims 11 to 14, wherein the processing circuitry is configured to:

estimate a signal-to-noise ratio (SNR) of the target subframe based on the noise covariance; and
perform at least one of

symbol detection of the target subframe based on the SNR, or
channel estimation on the target subframe based on the SNR.

# FIG. 1

# FIG. 2

# FIG. 3

Frame 214

Subframe 205

Slot 206

$N_{BW}$ subcarriers 204

$N_{RB}$ subcarriers 210

Resource element 212

Resource Block 208

$N_{symb}$ OFDM symbols 202

Frequency

Time

# FIG. 4

| NPBCH | | | | | NPSS | | | | NSSS | NPBCH | | | | | NPSS | | | | |
|---|---|---|---|---|---|---|---|---|---|---|---|---|---|---|---|---|---|---|---|
| #0 | #1 | #2 | #3 | #4 | #5 | #6 | #7 | #8 | #9 | #10 | #11 | #12 | #13 | #14 | #15 | #16 | #17 | #18 | #19 |

1st Frame         2nd Frame

# FIG. 5

Subcarrier #

| | 0 | 1 | 2 | 3 | 4 | 5 | 6 | 7 | 8 | 9 | 10 | 11 | 12 | 13 |
|---|---|---|---|---|---|---|---|---|---|---|---|---|---|---|
| 11 | X | X | X | | | | | | | | | | | |
| 10 | X | X | X | | | | | | | | | | | |
| 9 | X | X | X | | X | P1 | P0 | X | X | | | X | P1 | P0 |
| 8 | X | X | X | | | | | | | | | | | |
| 7 | X | X | X | | | | | | | | | | | |
| 6 | X | X | X | | X | P0 | P1 | X | X | | | X | P0 | P1 |
| 5 | X | X | X | | | | | | | | | | | |
| 4 | X | X | X | | | | | | | | | | | |
| 3 | X | X | X | | X | P1 | P0 | X | X | | | X | P1 | P0 |
| 2 | X | X | X | | | | | | | | | | | |
| 1 | X | X | X | | | | | | | | | | | |
| 0 | X | X | X | | X | P0 | P1 | X | X | | | X | P0 | P1 |

Symbol #

# FIG. 6

# FIG. 7

Subcarrier #

| | 0 | 1 | 2 | 3 | 4 | 5 | 6 | 7 | 8 | 9 | 10 | 11 | 12 | 13 |
|---|---|---|---|---|---|---|---|---|---|---|---|---|---|---|
| 11 | X | X | X | | | | | | | | | | | |
| 10 | X | X | X | | | | | | | | | | | |
| 9 | X | X | X | | | | | | | | | | | |
| 8 | X | X | X | | | | | | | | | | | |
| 7 | X | X | X | | | | | | | | | | | |
| 6 | X | X | X | | | | | | | | | | | |
| 5 | X | X | X | | | | | | | | | | | |
| 4 | X | X | X | | | | | | | | | | | |
| 3 | X | X | X | | | | | | | | | | | |
| 2 | X | X | X | | | | | | | | | | | |
| 1 | X | X | X | | | | | | | | | | | |
| 0 | X | X | X | | | | | | | | | | | |

Symbol #

# FIG. 8

# FIG. 9

START

RECEIVE DOWNLINK SIGNAL — S910

CALCULATE NOISE COVARIANCE
OF TARGET SUBFRAME — S920

ESTIMATE SNR OF TARGET SUBFRAME — S930

END

# FIG. 10

```
         ┌──────────┐
         │   S910   │
         └────┬─────┘
              │
              ▼
┌───────────────────────────────────┐
│ DETERMINE TYPE OF TARGET SUBFRAME │ ── S1010
└──────────────┬────────────────────┘
               │
               ▼
┌───────────────────────────────────┐
│     DETERMINE UNUSED RESOURCE      │
│     ELEMENTS IN TARGET SUBFRAME    │ ── S1020
└──────────────┬────────────────────┘
               │
               ▼
┌───────────────────────────────────┐
│     CALCULATE NOISE COVARIANCE     │
│        OF TARGET SUBFRAME          │ ── S1030
└──────────────┬────────────────────┘
               │
               ▼
         ┌──────────┐
         │   S930   │
         └──────────┘
```

# FIG. 11

PROGRAM STORAGE (1011)
- DATA STORAGE (1012)
- APPLICATION PROGRAM (1013)
- SNR ESTIMATION PROGRAM (1014)

(1010)

(1020)
- MEMORY INTERFACE (1021)
- PROCESSOR (1022)
- PERIPHERAL DEVICE INTERFACE (1023)

COMMUNICATION PROCESSOR (1090)

INPUT/OUTPUT CONTROLLER (1040)

DISPLAY (1050)    INPUT DEVICE (1060)

1000

# FIG. 12

Home Gadget 2100

2000

2120

2200

Access Point

2250

2300

2400

Server

Home Appliances

2140

Entertainment

2160

Vehicle

EP 4 542 884 A1

| | Europäisches Patentamt European Patent Office Office européen des brevets | **EUROPEAN SEARCH REPORT** | **Application Number** EP 24 20 2576 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 107 743 059 A (UNIV CHONGQING POSTS & TELECOM) 27 February 2018 (2018-02-27) | 1-5, 8-12,14, 15 | INV. H04B17/309 |
| A | * paragraphs [0020] - [0037]; claims 1-3 * ----- | 6,7,13 | |
| X | US 2021/099325 A1 (MOHAMED SHOKR HOSSAM [DE] ET AL) 1 April 2021 (2021-04-01) * paragraphs [0017] - [0021] * * paragraphs [0052] - [0063] * * paragraphs [0063] - [0064]; figure 9 * * paragraphs [0066] - [0067]; figures 10-11 * * figure 7 * ----- | 1-5,8, 11,12,14 | |
| A | US 2017/264466 A1 (HOSSEINI SEYEDKIANOUSH [US] ET AL) 14 September 2017 (2017-09-14) * paragraphs [0070] - [0081]; figure 7 * ----- | 1-15 | |
| A | US 2011/235555 A1 (ZHANG XIAOXIA [US] ET AL) 29 September 2011 (2011-09-29) * paragraph [0062] * ----- | 1-15 | |
| | | | **TECHNICAL FIELDS SEARCHED (IPC)** H04B |

The present search report has been drawn up for all claims

| Place of search | Date of completion of the search | Examiner |
|---|---|---|
| The Hague | 19 February 2025 | Losada Corderí, Iker |

EPO FORM 1503 03.82 (P04C01)

## ANNEX TO THE EUROPEAN SEARCH REPORT
## ON EUROPEAN PATENT APPLICATION NO.

EP 24 20 2576

This annex lists the patent family members relating to the patent documents cited in the above-mentioned European search report.
The members are as contained in the European Patent Office EDP file on
The European Patent Office is in no way liable for these particulars which are merely given for the purpose of information.

19-02-2025

| Patent document cited in search report | | Publication date | Patent family member(s) | | Publication date |
|---|---|---|---|---|---|
| CN 107743059 | A | 27-02-2018 | NONE | | |
| US 2021099325 | A1 | 01-04-2021 | EP | 3800820 A1 | 07-04-2021 |
| | | | US | 2021099325 A1 | 01-04-2021 |
| US 2017264466 | A1 | 14-09-2017 | EP | 3427453 A1 | 16-01-2019 |
| | | | US | 2017264466 A1 | 14-09-2017 |
| | | | WO | 2017156426 A1 | 14-09-2017 |
| US 2011235555 | A1 | 29-09-2011 | CN | 102812768 A | 05-12-2012 |
| | | | EP | 2550833 A1 | 30-01-2013 |
| | | | JP | 5512876 B2 | 04-06-2014 |
| | | | JP | 2013528003 A | 04-07-2013 |
| | | | KR | 20130020670 A | 27-02-2013 |
| | | | US | 2011235555 A1 | 29-09-2011 |
| | | | WO | 2011119765 A1 | 29-09-2011 |

For more details about this annex : see Official Journal of the European Patent Office, No. 12/82